# EUROPÄISCHE PATENTANMELDUNG

(11) **EP 4 438 405 A1**
(43) Veröffentlichungstag der Anmeldung: **02.10.2024**
(21) Anmeldenummer: 23213977.4
(22) Anmeldetag: 04.12.2023
(51) Int. Cl.: B60P 1/28

(54) **ABROLLCONTAINERRAHMEN MIT LÖSBARER HALTERUNG**

(30) Priorität: 28.03.2023 DE 102023107879
(71) Anmelder: Simon, Thomas, 77749 Hohberg (DE)
(72) Erfinder: Simon, Thomas, 77749 Hohberg (DE)
(74) Vertreter: Mertzlufft-Paufler, Cornelius

(57) **Zusammenfassung**

Bei einem Abrollcontainerrahmen (1) mit einem metallischen Traggestell (2), welches zwei horizontal verlaufende Kufen (3) aufweist, und mit einer nach oben aufragenden Halterung (4) zum Abladen des Abrollcontainerrahmens (1) von einem Nutzfahrzeug, wird vorgeschlagen die Halterung (4) an dem Traggestell (2) lösbar zu befestigen (Fig. 1).

## Beschreibung

Die Erfindung betrifft einen Abrollcontainerrahmen mit einem metallischen Traggestell, welches zwei horizontal verlaufende Kufen aufweist, und mit einer nach oben aufragenden Halterung zum Abladen des Abrollcontainerrahmens von einem Nutzfahrzeug.

Bekannte Abrollcontainerrahmen zur Aufnahme von Containern oder ähnlichen Aufbauten besitzen Halterungen zum Aufladen des Abrollcontainerrahmens auf Nutzfahrzeuge oder zu dessen Abladen von solchen. Diese bekannten Halterungen sind nach DIN 30722 unlösbar mit dem Abrollcontainerrahmen verbunden. Bei den vorbekannten Abrollcontainerrahmen befindet sich gemäß DIN 30722 eine Hakenaufnahme auf einer Höhe von 1570 mm.

Es sind weiter als Abrollcontainer ausgebildete Abrollcontainerrahmen bekannt, deren Containerseitenwände eine Höhe haben, die geringer ist als die Höhe der Hakenaufnahme. Diese Abrollcontainerrahmen sind beispielweise für Anwendungen als Schuttcontainer gefragt. Die niedrigen Containerseitenwände erlauben dem Anwender eine Last, zum Beispiel einen Schutteimer, ohne größere körperliche Anstrengung über die Seitenwand zu heben.

Bei bekannten als Abrollcontainer ausgebildeten Abrollcontainerrahmen, bei denen die Containerseitenwände niedriger sind als die Hakenaufnahme des Containers beziehungsweise des Abrollcontainerrahmens, überragt die Hakenaufnahme die Seitenwände des Abrollcontainers daher an einer Stirnseite.

Der Erfindung liegt die Aufgabe zugrunde, die Gebrauchseigenschaften von Abrollcontainerrahmen zu verbessern.

Zur Lösung dieser Aufgabe schlägt die Erfindung die Merkmale von Anspruch 1 vor. Insbesondere wird somit erfindungsgemäß bei einem Abrollcontainerrahmen der eingangs beschriebenen Art zur Lösung der genannten Aufgabe vorgeschlagen, dass die Halterung an dem Traggestell lösbar befestigt ist. Die Halterung kann auch als Joch bezeichnet werden. Dies erlaubt, die Halterung beispielsweise nach dem Transport von dem Abrollcontainerrahmen abzunehmen. Hierdurch kann beispielsweise erreicht werden, dass der Abrollcontainerrahmen insbesondere an dessen Stirnseite leichter zugänglich ist. Beispielsweise kann hierdurch der Abrollcontainerrahmen von allen Seiten in einer einheitlichen Höhe zugänglich sein, auch wenn die Halterung wie üblich über Seitenwände des Abrollcontainerrahmens nach oben hinausragen. Es handelt sich daher um einen Abrollcontainerrahmen für Nutzfahrzeuge. Die Haltung des Abrollcontainerrahmens ist insbesondere auch geeignet zum Aufladen des Abrollcontainerrahmens auf ein Nutzfahrzeug.

Bei einer vorteilhaften Ausgestaltung ist vorgesehen, dass die Halterung zwei nach oben ragende Stiele aufweist, wobei jeder der beiden Stiele jeweils an einer der beiden Kufen lösbar befestigt ist, insbesondere wobei die Stiele und die Kufen ineinandergesteckt sind, insbesondere an einem nach oben gebogenen Endabschnitt. Dadurch dass die Halterung zwei nach oben ragende Stiele aufweist, kann beispielsweise eine, für ein Aufladen oder Abladen des Abrollcontainerrahmens, notwendige Höhe der Halterung erreicht werden. Vorzugsweise kann vorgesehen sein, dass die Stiele und die Kufen in einer vertikalen Richtung ineinandergesteckt sind. Dies kann beispielsweise in dem zuvor erwähnten nach oben gebogenen Endabschnitt der Kufen erfolgen. In einer alternativen bevorzugten Ausgestaltung sind die Stiele und die Kufen in einer horizontalen Richtung ineinandergesteckt. Dies kann beispielsweise in einem gebogenen Endabschnitt der Stiele erfolgen.

Bei einer vorteilhaften Ausgestaltung ist vorgesehen, dass die Halterung in der Höhe verstellbar ist. Hierdurch kann beispielsweise erreicht werden, dass nach dem Aufstellen des Abrollcontainerrahmens die Halterung in der Höhe vermindert werden kann, um an der Seite, an der sich die Halterung befindet, einen leichteren Zugang um Abrollcontainerrahmen zu ermöglichen. Insbesondere kann vorgesehen sein, dass die Stiele in der Höhe verstellbar sind. Hierdurch kann beispielsweise erreichbar sein, dass die Stiele für eine bessere Zugänglichkeit des Abrollcontainerrahmens absenkbar sind.

Bei einer vorteilhaften Ausgestaltung ist vorgesehen, dass die Stiele jeweils mindestens zwei gegeneinander bewegliche Stielabschnitte aufweisen. Die Höhe der Halterung kann auf diese Weise verändert werden. Insbesondere kann vorgesehen sein, dass die Stielabschnitte an einem Gelenk klappbar sind. Hierdurch kann beispielsweise erreichbar sein, dass die Stiele auf die Hälfte ihrer ursprünglichen Höhe zusammengeklappt werden können. Hierdurch wird eine alternative Ausführungsform zur lösbar befestigten Halterung geschaffen. Hierdurch wird ebenfalls das Ziel erreicht, die Stirnseite des Abrollcontainerrahmens leichter zugänglich zu machen und eine von allen Seiten einheitliche Höhe zu schaffen. Ein Klappmechanismus der Halterung, insbesondere Gelenk wie etwa das zuvor erwähnte Gelenk, kann sich beispielsweise auf halber Höhe der Halterung befinden. Hierdurch kann beispielweise erreichbar sein, dass die Halterung auf halber Höhe geklappt werden kann, um eine minimale Höhe der Halterung im geklappten Zustand zu erreichen. Alternativ kann vorgesehen sein, dass die Stielabschnitte ineinander verschiebbar sind. Auch hierdurch kann die Höhe der Stiele verändert werden. Um einen Zugang zum Abrollcontainerrahmen an einer Stirnseite des Abrollcontainerrahmens, an der die Stiele angeordnet sind, zu schaffen, kann ein oberer Stielabschnitt in einen unteren Stielabschnitt verschoben werden.

Bei einer vorteilhaften Ausgestaltung ist vorgesehen, dass die Kufen an einer Stirnseite des Abrollcontainerrahmens nach oben gebogen sind, insbesondere wobei die Kufen in einem nach oben gebogenen Endabschnitt der Kufen hohl ausgebildet sind. Hierdurch kann beispielweise die Montage der Halterung an den Kufen erleichtert werden. Eine hohle Ausgestaltung der Stiele und/oder Kufen kann beispielsweise auch dann bevorzugt verwirklicht sein, wenn die Kufen und die Stiele lösbar ineinandergesteckt sind. Die Stiele können vertikal in die nach oben gebogenen Endabschnitt der Kufen gesteckt sein.

Bei einer vorteilhaften Ausgestaltung ist vorgesehen, dass die Halterung eine zweite Hakenaufnahme hat. Hierdurch kann beispielsweise erreichbar sein, dass der Abrollcontainerrahmen mit einer alternativen Zug- oder Hebevorrichtung, beispielsweise einem Dreipunkt-Kraftheber bewegt werden kann. Alternativ kann vorgesehen sein, dass die Halterung eine Anhängerkupplung hat. Hierdurch kann beispielsweise erreichbar sein, dass der Abrollcontainerrahmen mit einer einfachen, aus dem KFZ-Bereich bekannten Kupplung bewegt werden kann.Bei einer vorteilhaften Ausgestaltung ist vorgesehen, dass eine mechanische Verbindung der Halterung mit dem Traggestell mittels metallischen Bauteilen verstärkt ist, insbesondere wobei eine mechanische Verbindung von zwei Stielen oder von den zwei Stielen mit den Kufen mittels Verstärkungsplatten oder Eckwinkel verstärkt ist und/oder wobei die metallischen Bauteile, die Kufen und die Stiele über Befestigungsmittel miteinander lösbar und stabil verbunden sind. Hierdurch kann beispielsweise die Zug- und Druckfestigkeit, insbesondere die Biegefestigkeit, der mechanischen Verbindung erhöht werden, was sich positiv auf die Lebensdauer des Abrollcontainerrahmens auswirkt. Zur lösbaren und stabilen mechanischen Verbindung können beispielsweise Bolzen, Schrauben und Splinte verwendet werden.

Bei einer vorteilhaften Ausgestaltung ist vorgesehen, dass die Halterung eine Hakenaufnahme hat, insbesondere wobei die Hakenaufnahme zwischen Stielen oder zwischen den zwei Stielen aufgehängt ist. Hierdurch kann erreicht werden, dass der Abrollcontainerrahmen beim Aufladen und Abladen, durch die eingangs beschriebene Konstruktionsweise, mittig an der Stirnseite von einem Haken gegriffen werden kann. Hierbei kommt es zu einem Formschluss zwischen Haken und Hakenaufnahme, was sich positiv auf die Stabilität des Abrollcontainerrahmens auswirkt.

Bei einer vorteilhaften Ausgestaltung ist vorgesehen, dass das Traggestell eine Plattform aufweist, an deren Unterseite die Kufen angeordnet sind, insbesondere wobei die Kufen mit der Plattform unlösbar verbunden, vorzugsweise verschweißt sind. Der Abrollcontainerrahmen kann dann insbesondere als Abrollplattform ausgebildet sein. Die Plattform kann mit dem Traggestell lösbar oder unlösbar verbunden sein, wobei bei einer unlösbaren Verbindung insbesondere eine Verschweißung besonders vorteilhaft sein kann.

Bei einer vorteilhaften Ausgestaltung ist vorgesehen, dass die Kufen als lineare Führungselemente ausgebildet sind und/oder dass die Kufen entlang einer Längsausdehnung des Traggestells verlaufen. Hierdurch wird eine gleichmäßige Lastverteilung des Abrollcontainerrahmens auf die Kufen erreicht, was die Stabilität des Abrollcontainerrahmens erhöht.

Bei einer vorteilhaften Ausgestaltung ist vorgesehen, dass der Abrollcontainerrahmen an einer Stirnseite des Abrollcontainerrahmens gegenüberliegenden Seite des Abrollcontainerrahmens Rollen aufweist, insbesondere wobei die Rollen unterhalb und/oder an einer oder der Plattform aufgehängt sind. Hierdurch wird es beispielsweise erleichtert, den Abrollcontainerrahmen zu bewegen, insbesondere das Aufladen auf -und Abladen von einem Nutzfahrzeug. Die Rollen sind nicht zwingend erforderlich. Diese können in anderen Ausgestaltungen auch nicht vorhanden sein. Es kann auch Ausgestaltungen geben, bei denen der Abrollcontainerrahmen anstelle der Rollen rollenfreie Aufsätze oder dergleichen aufweist.

Bei einer vorteilhaften Ausgestaltung ist vorgesehen, dass der Abrollcontainerrahmen Halteelemente für eine außenseitig, bevorzugt allseitig, umlaufende Verkleidung aufweist und/oder dass der Abrollcontainerrahmen an einer, mehreren oder allen Seiten eine außenseitig umlaufende, bevorzugt abnehmbare, Verkleidung aufweist, insbesondere wobei die Verkleidung aus horizontalen Verkleidungselementen ausgebildet ist und/oder wobei die Verkleidung eine maximale Höhe von einem Meter, bevorzugt von 90 Zentimeter, nicht überschreitet. Hierbei wird die vom Boden ausgemessen, wenn der Abrollcontainerrahmen mit den Kufen auf diesem abgestellt ist. Die Haltelemente für eine Verkleidung, bevorzugt abnehmbare Verkleidung, erweitern die Einsatzmöglichkeiten des Abrollcontainerrahmens. Eine maximale Höhe von einem Meter, bevorzugt von 90 Zentimeter, ermöglicht beispielsweise einen einfachen Zugang zum Inneren des Abrollcontainerrahmens.

Bei einer vorteilhaften Ausgestaltung ist vorgesehen, dass der Abrollcontainerrahmen eine Containeraufnahme hat. Hierdurch kann der Abrollcontainerrahmen als Abrollcontainer ausgebildet sein. Die Containeraufnahme kann mit dem Traggestell lösbar oder unlösbar verbunden sein. Bei einer unlösbaren Verbindung ist insbesondere eine Verschweißung vorteilhaft.

Erfindungsgemäß ist zu Lösung der eingangs beschriebenen Aufgabe weiter ein Abrollcontainerrahmen vorgesehen, wobei das Traggestell ein Modul trägt, welches einen Begrünungsbehälter umfasst, und wobei der Begrünungsbehälter in fluidischer Verbindung mit einem von dem Traggestell getragenen Wassertank steht, insbesondere wobei der Abrollcontainerrahmen eine mit dem Begrünungsbehälter bewegungsverbundene Kippvorrichtung aufweist, mittels derer der Begrünungsbehälter von einer Ausgangsstellung in eine Kippstellung bewegbar ist.

Der Abrollcontainerrahmen ist stabil und robust ausgebildet und kann insbesondere Druck- und/oder Zugkräfte aufnehmen. Beim Transport eines Abrollcontainers in Verbindung mit dem Abrollcontainerrahmen ist dies vorteilhaft.

Der Abrollcontainerrahmen kann beispielsweise aus Metall und/oder einem anderen robusten und stabilen Material gefertigt sein.

Die Halterung des Abrollcontainerrahmens ermöglicht das Be- und Abladen des Abrollcontainerrahmens von einem Nutzfahrzeug insbesondere dann, wenn die form- und/oder kraftschlüssige Verbindung mit der Halterung des Nutzfahrzeugs hergestellt ist.

Das Metall des Abrollcontainerrahmens ist vorzugsweise rostfrei, sodass der Abrollcontainerrahmen besonders langlebig sein kann. Beispielsweise kann es bei dem Metall um Stahl, insbesondere rostfreien Stahl, handeln.

Die Erfindung wird nun anhand von Ausführungsbeispielen näher beschrieben, ist jedoch nicht auf die Ausführungsbeispiele beschränkt. Weitere Ausführungsbeispiele ergeben sich durch Kombination der Merkmale einzelner oder mehrerer Ansprüche untereinander und/oder mit einzelnen oder mehreren Merkmalen der Ausführungsbeispiele.

Es zeigt:
- Figur 1: Abrollcontainerrahmen in Seitenansicht,
- Figur 2: der Abrollcontainerrahmen aus Fig. 1 in Frontansicht,
- Figur 3: weiterer Abrollcontainerrahmen in Seitenansicht,
- Figur 4: Halterung des in Fig. 3 gezeigten Abrollcontainerrahmens in Seitenansicht und
- Figur 5: Abrollcontainerrahmen mit alternativer Halterung.

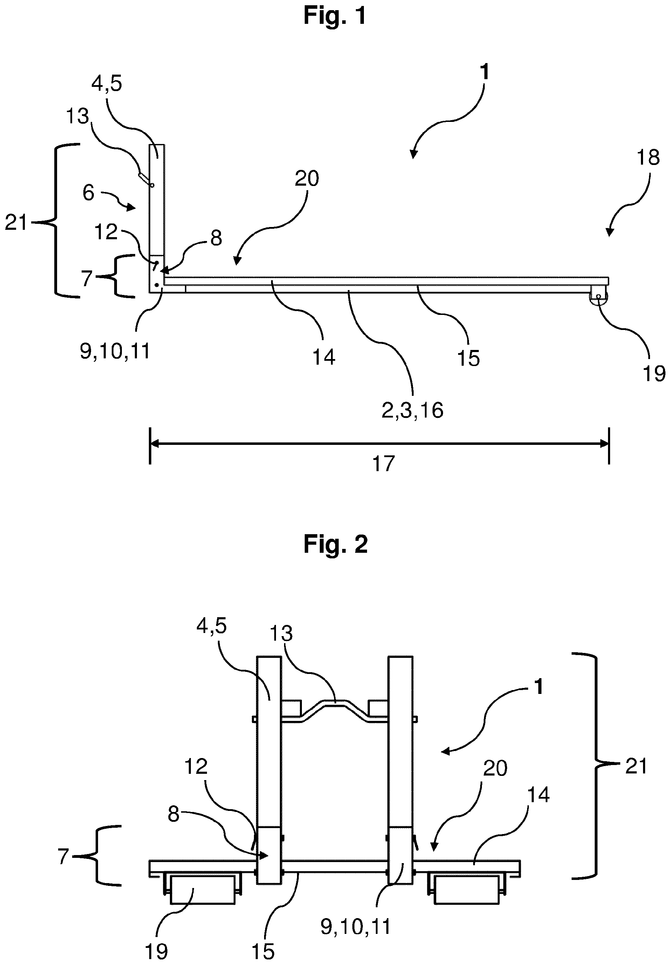

Figur 1 und Figur 2 zeigen ein erstes Ausführungsbeispiel eines erfindungsgemäßen Abrollcontainerrahmens 1 mit einem metallischen Traggestell 2. Die horizontal verlaufenden Kufen 3, die vorzugsweise parallel zueinander verlaufen sorgen für einen sicheren Stand des Abrollcontainerrahmens 1. Die nach oben aufragende Halterung 4 ist am Traggestell 2 lösbar befestigt und dient dem Abladen des Abrollcontainerrahmens 1 von einem Nutzfahrzeug. Die beiden nach oben aufragenden Stiele 5 die die Halterung 4 aufweist, sind jeweils and den Kufen 3 des Abrollcontainerrahmens 1 lösbar befestigt. Vorteilhaft ist für die sichere mechanische Verbindung 8, wenn Stiele 5 und Kufen 3 in einem nach oben gebogenen Endabschnitt 7 ineinandergesteckt sind. Der Endabschnitt 7 kann beispielsweise auch eckig ausgeführt sein. Zur Verstärkung der Verbindung 8 zwischen Halterung 4 und Traggestell 2 ist die Verbindung 8 mittels metallischen Bauteilen 9, beispielweise Verstärkungsplatten 10 oder Eckwinkel 11 verstärkt. Zur lösbaren und stabilen Befestigung der Halterung 4 an den Kufen 3 mit der durch metallische Bauteile 9 verstärkten Verbindung 8 kommen Befestigungsmittel 12 zum Einsatz. Figur 2 zeigt die Halterung 4 die eine Hakenaufnahme 13 hat die zwischen den Stielen 5 aufgehängt ist.

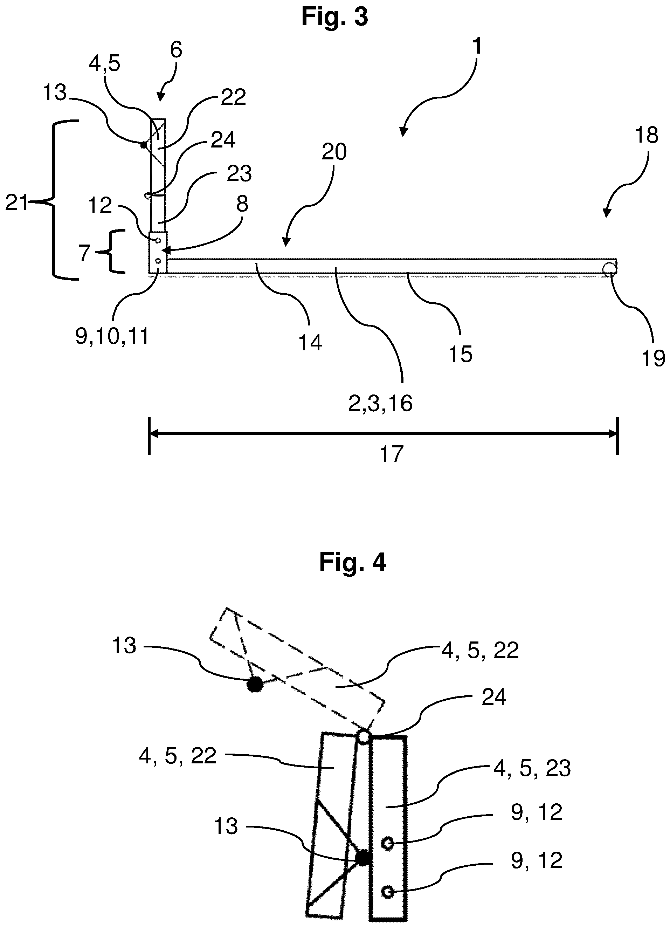

Das in Figur 3 und 4 gezeigte Ausführungsbeispiel unterscheidet sich von dem in Fig. 1 und 2 gezeigten Ausführungsbeispiel durch eine anders gestaltete Halterung dadurch, dass die Halterung 4 und die Stiele 5 in der Höhe verstellbar sind. Die Stiele 5 weisen jeweils mindestens zwei gegeneinander bewegliche Stielabschnitte 22, 23 auf. In der gezeigten Ausführungsform haben die Stiele 5 jeweils ein Gelenk 24, so dass die Stielabschnitte 22, 23 klappbar sind. In einer nicht gezeigten Ausführungsform sind die Stielabschnitte 22, 23 ineinander verschiebbar. Figur 4 zeigt einen Klappvorgang, wobei die gestrichelte Darstellung des oberen Stielabschnitts 22 ein Stadium des Klappvorgangs zeigt.

In beiden gezeigten Ausführungsbeispielen weist das Traggestell 2 eine Plattform 14 auf, deren Unterseite 15 lösbar oder unlösbar mit den Kufen 3 verbunden ist. Die Kufen 3 sind als lineare Führungselemente 16 ausgebildet und verlaufen entlang einer Längsausdehnung 17 des Traggestells 2. An der Stirnseite 6 des Abrollcontainers 1 gegenüberliegenden Seite 18 weist der Abrollcontainerrahmen 1 Rollen 19 auf. Diese sind unterhalb der Plattform 14 aufgehängt. Der Abrollcontainerrahmen 1 weist eine Containeraufnahme 20 auf. In einer nichtgezeigten Ausgestaltung hat der Abrollcontainerrahmen 1 Haltelemente für eine Verkleidung und eine Verkleidung. Die Verkleidung ist außenseitig angebracht und verläuft umlaufend und vorzugsweise allseitig. Die Verkleidung zeichnet sich weiter dadurch aus, dass sie abnehmbar ist und aus horizontalen Verkleidungselementen ausgebildet ist. Die Verkleidung hat eine maximale Höhe von einem Meter, vorzugsweise eine Höhe von 90 Zentimetern. In einer weiteren nicht gezeigten Ausgestaltung des Abrollcontainerrahmens 1 trägt das Traggestell 2 ein Modul, welches einen Begrünungscontainer umfasst. Dieser steht in einer fluidischen Verbindung mit einem Wassertank, der ebenfalls vom Traggestell 2 getragen wird. Insbesondere weist der Abrollcontainerrahmen 1 eine mit dem Begrünungscontainer bewegungsverbundene Kippvorrichtung auf, mittels derer die Begrünungsbehälter von einer Ausgangsstellung in eine Kippstellung bewegbar ist.

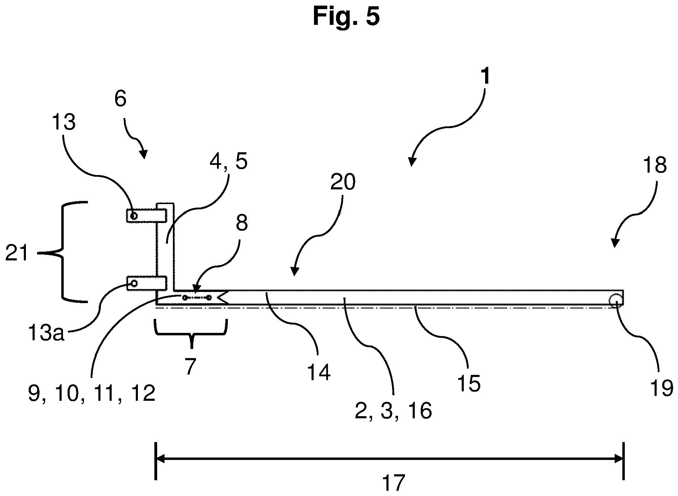

Figur 5 zeigt den Abrollcontainerrahmen 1 mit einer alternativen Halterung 4. Hierbei weist die Halterung 4 eine zweite Hakenaufnahme 13a auf. Die zweite Hakenaufnahme 13a ermöglicht, dass der Abrollcontainerrahmen 1 mit einer alternativen Zugvorrichtung, beispielsweise einem Dreipunkt-Kraftheber, bewegt werden kann. In einer nicht gezeigten Ausführungsform weist der Abrollcontainerrahmen 1 eine Anhängekupplung auf.

Bei einem Abrollcontainerrahmen 1 mit einem metallischen Traggestell 2, welches zwei horizontal verlaufende Kufen 3 aufweist, und mit einer nach oben aufragenden Halterung 4 zum Abladen des Abrollcontainerrahmens 1 von einem Nutzfahrzeug, wird vorgeschlagen die Halterung 4 an dem Traggestell 2 lösbar zu befestigen.

### Bezugszeichenliste

- 1: Abrollcontainerrahmen
- 2: Traggestell
- 3: Kufen
- 4: Halterung
- 5: Stiele
- 6: Stirnseite
- 7: Endabschnitt
- 8: Verbindung
- 9: Bauteile
- 10: Verstärkungsplatte
- 11: Eckwinkel
- 12: Befestigungsmittel
- 13: Hakenaufnahme
- 13a: weitere Hakenaufnahme
- 14: Plattform
- 15: Unterseite
- 16: Führungselemente
- 17: Längsausdehnung
- 18: gegenüberliegende Seite
- 19: Rollen
- 20: Containeraufnahme
- 21: Höhe der Halterung
- 22: oberer Stielabschnitt
- 23: unterer Stielabschnitt
- 24: Gelenk

## Patentansprüche

1. Abrollcontainerrahmen (1) mit einem metallischen Traggestell (2), welches zwei horizontal verlaufende Kufen (3) aufweist, und mit einer nach oben aufragenden Halterung (4) zum Abladen des Abrollcontainerrahmens (1) von einem Nutzfahrzeug, **dadurch gekennzeichnet, dass** die Halterung (4) an dem Traggestell (2) lösbar befestigt ist.

2. Abrollcontainerrahmen (1) nach dem voranstehenden Anspruch, **dadurch gekennzeichnet, dass** die Halterung (4) zwei nach oben ragende Stiele (5) aufweist, wobei jeder der beiden Stiele (5) jeweils an einer der beiden Kufen (3) lösbar befestigt ist, insbesondere wobei die Stiele (5) und die Kufen (3) ineinandergesteckt sind.

3. Abrollcontainerrahmen (1) nach einem der vorangehenden Ansprüche, **dadurch gekennzeichnet, dass** die Halterung (4), insbesondere die Stiele (5), in der Höhe verstellbar ist/sind.

4. Abrollcontainerrahmen (1) nach einem der Ansprüche 2 oder 3, **dadurch gekennzeichnet, dass** die Stiele (5) jeweils mindestens zwei gegeneinander bewegliche Stielabschnitte (22, 23) aufweisen, insbesondere wobei die Stielabschnitte (22, 23) an einem Gelenk (24) klappbar sind oder wobei die Stielabschnitte (22, 23) ineinander verschiebbar sind.

5. Abrollcontainerrahmen (1) nach einem der vorstehenden Ansprüche, **dadurch gekennzeichnet, dass** die Kufen (3) an einer Stirnseite (6) des Abrollcontainerrahmens (1) nach oben gebogen sind, insbesondere wobei die Kufen (3) in einem nach oben gebogenen Endabschnitt (7) der Kufen (3) hohl ausgebildet sind.

6. Abrollcontainerrahmen (1) nach einem der vorstehenden Ansprüche, **dadurch gekennzeichnet, dass** eine mechanische Verbindung (8) der Halterung (4) mit dem Traggestell (2) mittels metallischen Bauteilen (9) verstärkt ist, insbesondere wobei eine mechanische Verbindung von zwei Stielen (5) oder von den zwei Stielen (5) mit den Kufen (3) mittels Verstärkungsplatten (10) oder Eckwinkel (11) verstärkt ist und/oder wobei die metallischen Bauteile (9), die Kufen (3) und die Stiele (5) über Befestigungsmittel (12) miteinander lösbar und stabil verbunden sind.

7. Abrollcontainerrahmen (1) nach einem der vorstehenden Ansprüche, **dadurch gekennzeichnet, dass** die Halterung (4) eine Hakenaufnahme (13) hat, insbesondere wobei die Hakenaufnahme (13) zwischen Stielen (5) oder zwischen den zwei Stielen (5) aufgehängt ist.

8. Abrollcontainerrahmen (1) nach einem der vorstehenden Ansprüche, **dadurch gekennzeichnet, dass** das Traggestell (2) eine Plattform (14) aufweist, an deren Unterseite (15) die Kufen (3) angeordnet sind, insbesondere wobei die Kufen (3) mit der Plattform (14) unlösbar verbunden, vorzugsweise verschweißt ist.

9. Abrollcontainerrahmen (1) nach einem der vorstehenden Ansprüche, **dadurch gekennzeichnet, dass** die Kufen (3) als lineare Führungselemente (16) ausgebildet sind und/oder dass die Kufen (3) entlang einer Längsausdehnung (17) des Traggestells (2) verlaufen.

10. Abrollcontainerrahmen (1) nach einem der vorstehenden Ansprüche **dadurch gekennzeichnet, dass** der Abrollcontainerrahmen (1) an einer Stirnseite (6) des Abrollcontainerrahmens (1) gegenüberliegenden Seite (18) des Abrollcontainerrahmens (1) Rollen (19) aufweist, insbesondere wobei die Rollen (19) unterhalb und/oder an einer oder der Plattform (14) aufgehängt sind.

11. Abrollcontainerrahmen (1) nach einem der vorstehenden Ansprüche, **dadurch gekennzeichnet, dass** der Abrollcontainerrahmen (1) Halteelemente für eine außenseitig, bevorzugt allseitig, umlaufende Verkleidung aufweist und/oder dass der Abrollcontainerrahmen (1) an einer, mehreren oder allen Seiten eine außenseitig umlaufende, bevorzugt abnehmbare, Verkleidung aufweist, insbesondere wobei die Verkleidung aus horizontalen Verkleidungselementen ausgebildet ist und/oder wobei die Verkleidung eine maximale Höhe von einem Meter, bevorzugt von 90 Zentimeter, nicht überschreitet.

12. Abrollcontainerrahmen (1) nach einem der vorstehenden Ansprüche **dadurch gekennzeichnet, dass** der Abrollcontainerrahmen eine Containeraufnahme (20) hat.

13. Abrollcontainerrahmen (1) nach einem der vorstehenden Ansprüche, **dadurch gekennzeichnet, dass** die Halterung (4) eine zweite Hakenaufnahmen (13a) oder eine Anhängekupplung aufweist.

14. Abrollcontainerrahmen (1) nach einem der vorstehenden Ansprüche, wobei das Traggestell (2) ein Modul trägt, welches einen Begrünungsbehälter umfasst, und wobei der Begrünungsbehälter in fluidischer Verbindung mit einem von dem Traggestell getragenen Wassertank steht, insbesondere wobei der Abrollcontainerrahmen (1) eine mit dem Begrünungsbehälter bewegungsverbundene Kippvorrichtung aufweist, mittels derer der Begrünungsbehälter von einer Ausgangsstellung in eine Kippstellung bewegbar ist.
